# EUROPEAN PATENT SPECIFICATION

(11) **EP 1 263 164 B1**
(45) Date of publication and mention of the grant of the patent: **07.06.2006**
(21) Application number: 01810637.7
(22) Date of filing: 29.06.2001
(51) Int. Cl.: H04L 9/32

(54) **Method and token for registering users of a public-key infrastuture and registration system**
Verfahren und Datenträger zur Eintragung von Benutzern einer Public-Key-Infrastruktur und Eintragungssystem
Procédé et jeton pour enregistrer des utilisateurs d'une infrastructure à clé publique et système d'enregistrement

(30) Priority: 23.05.2001 EP 01810513
(43) Date of publication of application: 04.12.2002
(73) Proprietor: Büttiker, Daniel, 8400 Winterthur (CH)
(72) Inventor: Büttiker, Daniel, 8400 Winterthur (CH)
(74) Representative: Rutz, Peter

(56) References cited:
- EP-A- 0 999 528
- WO-A-98/50875
- US-A- 5 280 527
- US-B1- 6 189 096
- R. FOURNIER, T. KAMIONEK: "The Cryptographic Smart Card: An integrated Solution" RSASECURITY WEB SEMINARE, [Online] 25 April 2001 (2001-04-25), pages 1-30, XP002213544 Retrieved from the Internet: <URL:www.rsasecurity.com> [retrieved on 2002-09-05]
- POLEMI D: "TTPs and biometrics for securing the payment of telemedical services" FUTURE GENERATIONS COMPUTER SYSTEMS, ELSEVIER SCIENCE PUBLISHERS. AMSTERDAM, NL, vol. 15, no. 2, 11 March 1999 (1999-03-11), pages 265-276, XP004222994 ISSN: 0167-739X

## Description

The present invention relates to a method, a token and a registration system for registering users of a public-key infrastructure according to claim 1, 12 and 20 respectively.

The present invention relates in particular to a method for reliably registering users at an authority of the public-key infrastructure in such a way that third parties can trust the issued certificates.

More particularly the present invention relates to a method for performing said registration with a token, which is capable of processing biometric data.

### BACKGROUND OF THE INVENTION

The emergence of the World Wide Web access to the Internet has been accompanied by recent focus on financial transaction vulnerabilities, crypto system weaknesses and privacy issues. Fortunately, technological developments also made a variety of controls available for computer security including tokens, biometric verifiers, encryption, authentication and digital signature techniques using preferably asymmetric public-key methods (see [1], Richard C. Dorf, THE ELECTRICAL ENGINEERING HANDBOOK, 2^{nd} Edition, CRC-Press, Boca Raton 1997, chapter 97, pages 2221-2234 and [7], A. Menezes, P. van Oorschot, S. Vanstone, HANDBOOK OF APPLIED CRYPTOGRAPHY, CRC-Press, Boca Raton 1997, chapter 1).

The basic security services to be provided are secrecy, authentication (assurance of sender identity to recipient), and digital signatures (authentication plus assurance to sender and third parties that the signature had not been created by the recipient). Also of importance is the notion of integrity which means preventing interference in the information conveying/storing process.

Almost all cryptosystems involve publicly known transformations of information, based on one or more keys, at least one of which being kept secret. The public-key cryptosystem disclosed 1976 by Diffie and Hellman is based on two keys, a private-key and a public-key, owned by users of this system.

As described in [2], U.S. Patent document No. 4,405,829 the public-key cryptosystem provides enciphered communication between arbitrary pairs of people, without the necessity of their agreeing on an enciphering key beforehand. The system of Diffie and Hellman, extended was extended by Tahar El Gamal (see [6]) to provide a method for creating a recognizable, unforgeable, document-dependent, digitised signature for a document whose authenticity the signer cannot later deny.

The RSA cryptosystem (named after R.L. Rivest, A. Shamir and L.M. Adleman which in [2] are mentioned as inventors) is the most widely used public-key cryptosystem. RSA is a commutative transformation which allows the private-key and the corresponding public-key to be used interchangeably as encryption or decryption keys, thus providing secrecy and authenticity on a secure channel between two parties A and B with no need for additional keys (see [1], pages 2225-2226).

Since, given only one key of an asymmetric key pair, it is practically infeasible to determine the other key, an owner A of a key pair may publish his public-key so that anyone can use this public-key to encrypt a message that only A can decipher with his private-key.

As described in [3], Marc Branchaud, A SURVEY OF PUBLIC-KEY INFRASTRUCTURES, Department of Computer Science, Mc Gill University, Montreal 1997, page 5, computing with public-key ciphers takes much longer than encoding the same message with a secret-key system. This has led to the practice of encrypting messages with a secret-key system such as DES and then encoding the secret-key with a public-key system such as RSA. In this case the public-key system securely transports the secret-key. In case that a message is sent secretly from A to B then, besides a secret-key, which is used optionally, only the key pair of B is used.

The described public-key system also allows owner A to sign a message to be sent to B with a digital signature. In this case the key pair of A is used. A encrypts the message or a corresponding hash of the message with his private-key which, on the other side of the transmission channel can be decrypted by B using A's public key. One key pair can therefore be used to receive an encrypted message or to send a digitally signed message.

B (and any third parties), who can decrypt with A's public-key a message signed by A, can therefore trust that A has signed the message as far as B can trust that the selected public-key truly belongs to A.

In order to ensure that public-keys can systematically be published and truly relate to the persons A, B, ... indicated by attached public-key values, registration and certification authorities (RA, CA) have been introduced to certify the relationship between a given key and a claimed identity.

According to [3], page 10, a public-key infrastructure, in its most simple form, is a system for publishing public-key values used in public-key cryptography. There are basic operations, namely registration, certification and validation, which are common to all public-key infrastructures.

Certification is the means by which registered public-key values, and information pertaining to those values, are published. A basic certificate therefore contains at least the public-key of the concerned subject, subject identification information, and identification information of the certifying authority.

The certificate is encrypted by the certification authority with the certification authority's private-key and can be decrypted with the publicly known public-key of the certification authority. In other words a certificate is therefore an encyrypted message issued by the certification authority declaring that the therein contained public-key relates to the enclosed subject identification information.

As described in [3], pages 19-21, authentication is a service provided by a public-key infrastructure. When a certifying authority certifies an entity and a user then validates that certification, the entity is said to have been authenticated.

The degree to which a user can trust the certificate's information and it's validity is a measure of the strength of the authentication.

[4], U.S. Patent document NO. 6,202,151 B1 describes a biometric certification system and method which implements an end-to-end security mechanism binding the biometric identification of the certificate applicants with their digital certificate. The binding is achieved by including biometric measurements in the certificate itself.

Prior to use of the disclosed biometric certification system and method, the biometric database is built using a registration process in which individuals are required to provide proof of identity. Once the registration authority is satisfied with such proof, the identification information is entered into the biometric certification management system and biometric measurements are then taken concurrently using at least one biometric input device. Such stored biometric measurements form the pre-stored biometric data in the biometric database which corresponds to the pre-registered individuals who have undergone the registration process.

Accordingly, pre-registered individuals may be properly authenticated, while unregistered individuals are rejected.

As mentioned in [4], column 5 the user identification data ID may typically contain 50 bits or less. Biometric information, which will be part of the biometric certificate, may require a large amount of memory storage of up to 4 MB. The end-to-end security mechanism described in [4] handles therefore with each transaction large amounts of data which for authentication must be transferred to a biometric certification management system where the received biometric data are extracted and compared with stored biometric data resulting in a high workload for each transaction.

The process of implementing and handling the certification system described in [4] involves therefore the use of considerable resources.

A further biometric certification system, that involves the transfer of biometric data for each transaction is disclosed in [8], WO 98/50875.

A system that allows the identification of a person by comparing biometric data read from a document and biometric data read from the person to be identified is disclosed in [9], EP 0 999 528 A2.

Users can also be authenticated through something possessed such as a token or a smart card. Tokens are, as described in [1], pages 2228-2229, hand-carried devices that are normally intended to increase password security by assuring that passwords are used only once, thereby reducing the vulnerability to password compromise. Tokens may contain internally an algorithm, which either works in synchronisation with an identical algorithm in a host computer or which transforms an input derived from a computer prompt into a password that matches the computer-transformed result. In a public-key infrastructure a token containing a private-key may used to sign a message as described above.

A cryptographic smart card that can be interated into the public-key infrastructure is disclosed in public-key [10], R. Fournier, T. Kamionek:"The Cryprographic Smart Card: An Integrated solution" RSA SECURITY WEB SEMINARE, [Online] 25 April 2001, pages 1-30.

The degree of authentication of a user by means of a token is however in many cases not strong enough. A person, to which the token had been assigned, may, rightfully or not, deny at a later stage that the token actually belongs to them or that the token is no longer in their possession.

It would therefore be desirable to improve the described public-key infrastructures. It would be desirable in particular to improve registration and authentication methods in public-key infrastructures thereby increasing the reliability of the system while keeping time and costs required for registration, authentication and processing at a low level. It would be desirable to provide a method allowing to register certificate applicants, using a token, at an authority of a public-key infrastructure in such a way that third parties can trust the certificate issued for said certificate applicant. It would also be desirable to create a token, which is capable of processing biometric data taken from its certificate applicant.

### SUMMARY OF THE INVENTION

The above and other objects of the present invention are achieved by a method, a token and a registration system for registering users of a public-key infrastructure according to claim 1, 12 and 20 respectively.

The inventive method allows users to register by means of a token or another secure device at an authority, preferably the registration authority of a public-key infrastructure based on credentials, including signed biometric data presented to said authority.

The biometric data are signed by means of a private key issued individually for example by the registration authority automatically for each token, making the token itself part of the registration authority.

In addition to signing the biometric data with the private key of the registration authority the data can further be signed with the user's private key contained in the token.

The token therefore comprises a functionality of a registration authority which significantly increases trust into the inventive system compared to known solutions.

After registration the token is a secure element of the public-key infrastructure allowing the holder/user of the token to decrypt encrypted messages sent to them and to securely sign messages, with digital signatures, that can be relied on by a third party.

According to the present invention the token comprises a processor, a memory device, an operating system and an interface device designed for exchanging data with a terminal which is capable to access the network of the public-key infrastructure. The memory device contains, included in a certificate, a private-key and a public-key for the user of the token and a private-key issued preferably by the registration authority which is used to sign and preferably encrypt biometric data read from an internal or external biometric input device.

The token is capable of storing a certificate which has been issued preferably by a certification authority of the public-key infrastructure based upon a certification request originating from the token.

To register a person for issuing a certificate is a difficult process, given the apparently contradictory requirements of, on the one hand, an inexpensive and convenient registration process and, on the other hand, strong mutual identification and authentication of the person and the certification authority, secure mutual exchange of their respective public keys and the secure storage of the person's private key on a token.

The inventive method allows the generated key pair contained in the token to be strongly bound to its owner/user since the authority of the public-key infrastructure, by means of the provided private-key issued by the registration authority, signs the biometric data read immediately at the users side.

The registration process is therefore considerably simplified for all parties.

Since the binding of the token to the user is strong and security of the public-key infrastructure is sufficient, even for high level transactions, there is no need to include the biometric data in the certificate issued for the token i.e. the user. Transactions are therefore not burdened with additional data to be transferred and processed for authentication purposes. Biometric data are therefore not included in each transaction since the existence of the biometric data does not increase the cryptographic security of the public key infrastructure as whole.

The authority of the public-key infrastructure, which preferably consists of a registration authority, a certification authority and a key and certificate management unit, issues preferably for each token an individual key-pair, a private-key used for signing the biometric data and a public-key which is used for decrypting signed messages at the site of the registration authority or, in case that it is also stored in the token, as well for encrypting messages, such as the certification request, sent to the registration authority.

Instead of or in addition to the public-key of the registration authority, the certificate of the certification authority or the certification path that validates the certification authority's certificate may be stored in the token so that messages sent to the authority of the public-key infrastructure may be encrypted.

In a preferred embodiment of the invention the biometric input device is integrated in the token which facilitates secure and trustworthy registration procedures and further usage of the token.

In order to prevent usage of the token by non-authorised persons, additional measures may be taken. The memory device of the token may store a password, biometric data or a hash of the biometric data. Access to the private- and public-key is then only granted in case that the entered biometric data and/or the password match the stored values. In the case that the entered biometric data does not match the stored values, then the entered biometric data originating from an unauthorised user could also be stored as evidence for legal prosecution.

Biometric data in preferred embodiments of the invention is however protected and never leaves the token unencrypted. Only in case of settling a fraud dispute will biometric data, either stored in the token or in the database of the authority, be disclosed for the purposes of expediting legal prosecution.

In order to optimise security and to facilitate handling of the tokens, the key pair for the user, the private-key and the public-key are preferably generated within the token. Critical data, in particular the data of the user, and said private keys are preferably not accessible by external devices.

The invention on the one hand therefore allows to strongly authenticate a user i.e. a partner in a transaction and on the other hand protects the user against misuse of the token without adding noteworthy burden onto the users or operators of the public-key infrastructure.

### BRIEF DESCRIPTION OF THE DRAWINGS

Some of the objects and advantages of the present invention have been stated, others will appear when the following description is considered together with the accompanying drawings, in which:
- Figure 1: shows the schematic of an inventive token and
- Figure 2: shows a public key infrastructure with inventive tokens implemented in a network such as the Internet.

### DETAILED DESCRIPTION OF THE PREFERRED EMBODIMENTS

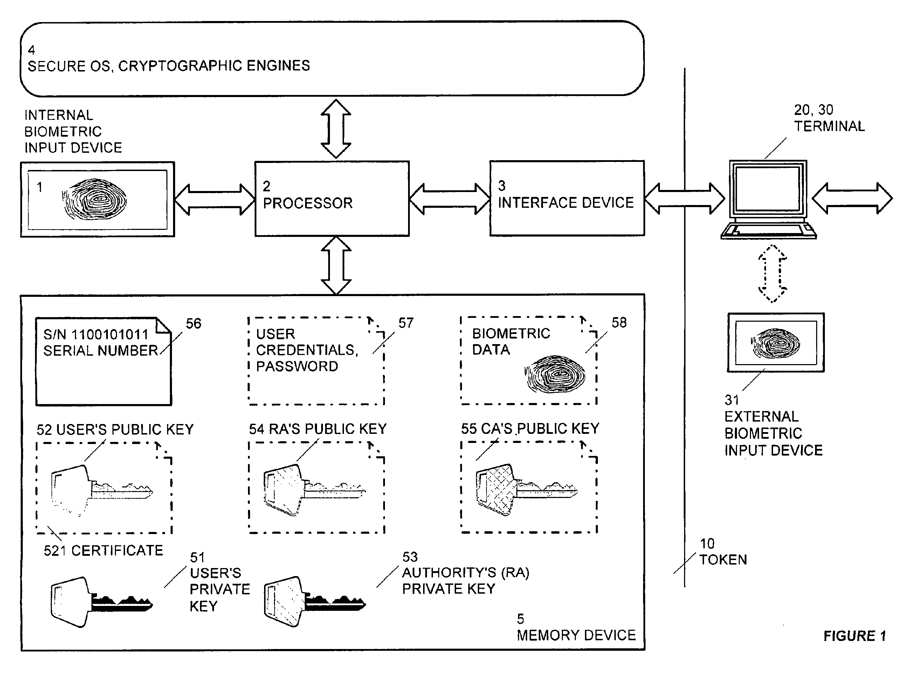

The inventive token shown in figure 1 is designed for registering users at an authority 100 of a public-key infrastructure which normally comprises a registration authority 101, in charge of registering new users of the public-key infrastructure, a certification authority 102, in charge of issuing certificates based on approved user's certification requests and a key and certificate management unit 103, handling and validating certificates and keys. Issued and revoked certificates of the users as well as the certificate of the certification authority 102 are published in a directory 104 to which said authorities 101, 102, 103 and users have access.

After the registration has been completed, the token 10 with it's private key and certificate then builds part of the public-key infrastructure, which allows its user to perform transactions over a network 200 such as the Internet.

An inventive token 10, which according to [1], pages 2228-2229, is a hand-carried device, comprised in its basic embodiment of a processor 2, a memory device 5, an operating system 4 including at least one cryptographic engine and an interface device 3, preferably a USB (universal serial bus) interface, designed for exchanging data with a terminal 20, 30 which is capable to access the network services 200 of the public-key infrastructure. The memory device 5 contains a private-key 51 and a public-key 52 for a user of the token 10 and a private-key 53 issued by the authority 100, preferably by the registration authority 101.

In order to optimise security and facilitate handling the user's key pair, the private-key 51 and the public-key 52 are preferably generated within the token 10. In this case the private-key 51, before or after the registration procedures, will never be available outside the token 10.

Tokens 10 are therefore normally initialised and issued by the authority 100, preferably the registration authority 101.

The token 10 comprises an internal biometric input device 1 or can be connected via the terminal 30 to an external biometric input device 32. Biometric data read during the registration procedures by the internal or external biometric input device 1, 31 is processed in the token 10 thereby signing at least said biometric data or a derivate, for example a hash generated thereof, by means of the private-key 53 issued by the authority 100, preferably the registration authority 101.

Signed biometric data, the user's public key 52 and possibly additional credentials of the user, which have been transferred through the terminal 20, 30 to the token 10 are entered into a certification request assembled preferably based on the Standard PKCS#10 (see [5], PKCS#10 Standard, Certification Request Syntax Standard, RSA Laboratories, May 2000) and sent to the authority 100, preferably the registration authority 101.

The registration authority 101 verifies and registers the received data and stores the user's credentials including the biometric data in the database 104. The authority 100, preferably the certification authority 102 then issues based upon the approved certification request a certificate 521 containing the user's public key 52 which then, possibly accompanied by the certification authority's 102 own certificate, is returned to the token 10 and stored therein.

The above mentioned PKCS#10 standard describes options for protecting the contents of the certification request. According to the present invention, biometric data sent as part of a PKCS #10 certificate request will be protected for integrity, non-repudiation and privacy.

In a preferred embodiment of the invention, besides the private-key 53, the public-key 54 of the registration authority 101 and/or the public-key 55 of the certification authority 102 are stored in the memory device 5 of the token 10 so that the certification request or data contained therein can be encrypted with one of these public-key 54, 55 before they are sent to the registration authority 101.

In the case where the encryption of the certification request is performed with the certification authority's 102 public-key 55, then the message is decrypted by the private-key of the certification authority 102. In case that the encryption of the certification request is performed with the registration authority's 101 public-key 54, then the message is decrypted by the private-key 53 of the registration authority 101.

In order to optimise security the authority 100, preferably the registration authority 101, issues for each token 10 an individual key-pair, a public-key 54 and a private-key 53, which is used for signing the biometric data.

In order to facilitate the retrieval of the required keys 53, 54 at the registration authority 101 the certification request is preferably accompanied by a serial number 56, which is stored in the memory device 5 of the token 10. The key pair 53, 54 issued for a token 10 is therefore preferably linked to its serial number.

Since none of the keys for signing the biometric data 58 are publicly available, the authority 100, preferably the registration authority 101, may use an asymmetric key pair 53, 54 or a symmetric key pair for signing the biometric data 58. In case that a symmetric key is enclosed in the token 10, then the registration authority 101 my find the corresponding symmetric key by means of the serial number of the token 10. In the same manner instead of a symmetric key a shared password, a password contained in the token 10 and a corresponding password stored at the registration authority 101, could be used for signing the biometric data 58. However as described above the use of an asymmetrical key pair is preferred compared to the use of a symmetrical key or a shared password, since sharing symmetrical keys or passwords always involves additional risks.

After the registration process has been completed and a certificate 521 has been issued the token is strongly linked to its user, so that based on the provided reliability and trust, high level transactions can be executed, since the user of the token can reliably be authenticated.

In order to protect the user against losses in case of theft of the token, biometric data 58 or a derivative such as a hash thereof or a password is preferably stored in the memory device 5. The password and further credentials of the user are stored in block 57 of the memory device 5 shown in figure 1. Access to the functions of the token 10 is then provided only when a password entered and/or biometric data read by the internal or external biometric input device 1, 31 matches the stored values.

The comparison of said data is preferably done within the token 10. The system is therefore not burdened with access procedures during which relatively large amounts of data need to be transferred.

It is however possible that biometric data read from the current user of the token 10 are transferred to the authority 100 for verification purposes. In the case that delivered values do not match stored values, data access is denied. The biometric data could optionally be stored in the database 104 or in the token (when used offline),for legal prosecution of non-authorised users of the token 10.

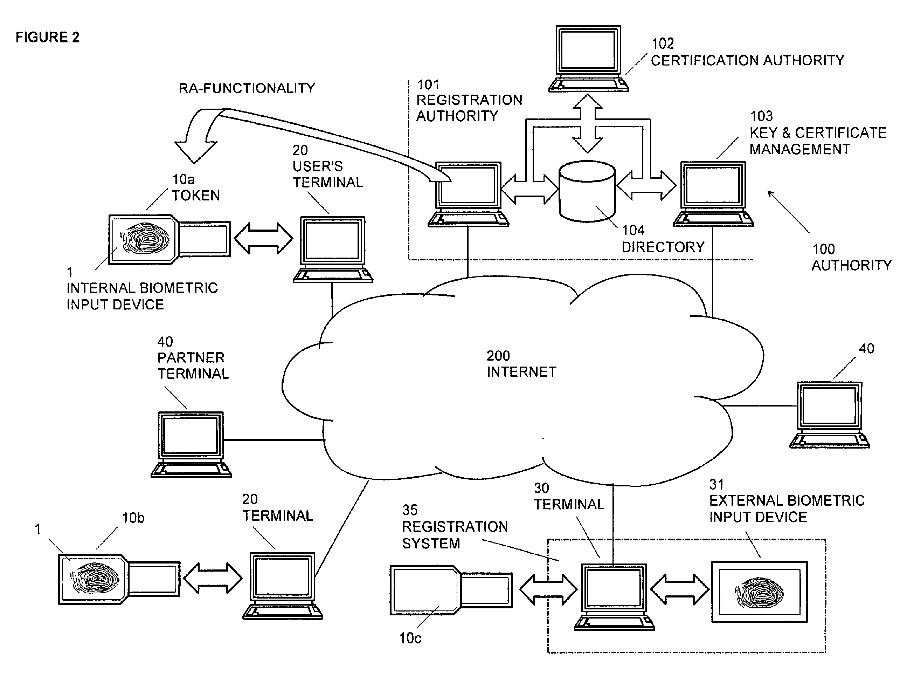

Figure 2 shows a public key infrastructure with inventive tokens 10a, 10b, 10c implemented in a network 200 such as the Internet. The authority 100 shown consists of a registration authority 101, a certification authority, a key and certificate management unit 103 and a database 104 containing the directory of the public key infrastructure. The users of tokens 10a and 10b, which contain integrated biometric data input devices 1 are connected to terminals 20 through which transactions can be carried out with users other terminals 20, 40.

Figure 2 further shows a registration system 35 which is preferably installed in places where tokens 10 can be obtained. In particular registration procedures with tokens 10 which do not contain an integrated biometric data input device 1 are performed with a registration system 35 which comprises a terminal 30 and a at least one device 31 capable of reading biometric data of a user. The registration system 35 may be connected to a scanner for reading fingerprints, to a camera or to a voice recorder.

Although the present invention has been described in detail with reference to preferred embodiments, persons having ordinary skill in the art will appreciate that various modifications and different implementations may be made without departing from the spirit and scope of the invention.

### REFERENCES :

[1] Richard C. Dorf, THE ELECTRICAL ENGINEERING HANDBOOK, 2^{nd} Edition, CRC-Press, Boca Raton 1997
[2] U.S. Patent document No. 4,405,829
[3] Marc Branchaud, A SURVEY OF PUBLIC-KEY INFRASTRUCTURES, Department of Computer Science, Mc Gill University, Montreal 1997
[4] U.S. Patent document NO. 6,202,151 B1
[5] PKCS#10 Standard, Certification Request Syntax Standard, RSA Laboratories May 2000 (available under http://www.rsasecurity.com/rsalabs/pkcs/index.html)
[6] Taher El Gamal, A PUBLIC KEY CRYPTOSYSTEM AND SIGNATURE SYSTEM BASED ON DISCRETE LOGARITHMS, IEEE Transactions on Information Theory, 31(4), 474-481, 1985
[7] A. Menezes, P. van Oorschot, S. Vanstone, HANDBOOK OF APPLIED CRYPTOGRAPHY, CRC-Press, Boca Raton 1997
[8] WO 98/50875
[9] EP 0 999 528 A2
[10] R. Fournier, T. Kamionek:"The Cryprographic Smart Card: An Integrated solution" RSA SECURITY WEB SEMINARE, [Online] 25 April 2001, pages 1-30

## Claims

1. Method for registering users of a public-key infrastructure based on credentials of a user, including biometric data presented to an authority (100) of the public-key infrastructure, wherein
a) a token (10), which comprises a processor (2), an interface device (3) and a memory device (5), containing a private-key (51) and a public-key (52) for the user of the token (10), is connected to a terminal (20, 30) capable to access the network (200) of the public-key infrastructure;
**characterised by** the steps of
b1) reading biometric data (58) of the user by means of a biometric input device (1; 31);
b2) signing the biometric data (58) with a key of an asymmetric or symmetric key pair, a private key (53), or by means of a shared password, that has been issued by the authority (100) and stored in the token (10);
b3) sending a certification request, containing the public-key (52), signed biometric data (58) and additional credentials of the user, to the authority (100);
c1) verifying and registering the received data by the authority (100);
c2) storing the biometric data (58) in a database (104);
c3) returning a corresponding certificate (520) and
d) storing the certificate (520) in the token.

2. Method according to claim 1 comprising the steps of double signing the biometric data with said key of an asymmetric or symmetric key pair or by means of a shared password and the user's private key (51).

3. Method according to claim 1 or 2, with a serial number of the token being stored in the memory device (5), which, included in the certification request, is sent to the authority (100) which, based on said serial number, retrieves the symmetric or asymmetric key or the password matching the key or password used for signing the biometric data (58) in order to decrypt the signed message.

4. Method according to claim 1, 2 or 3 for a public-key infrastructure with an authority (100), consisting of a registration authority (101), a certification authority (102) and a key and certificate management unit (103), comprising the steps of issuing for each token (10) an individual symmetric or asymmetric key-pair, a first key stored in the token (10) for signing the biometric data (58) and a second key (54) stored at the registration authority (101).

5. Method according to claim 1, 2, 3 or 4 with the public-key (54; 55) of the registration authority (101) and or the certification authority (102) being stored in the token (10), comprising the steps of encrypting at least the part of the certification request containing the biometric data with one of said public-keys (54; 55) before sending it and decrypting the received certification request by the registration authority (101) with the corresponding private-key (53, ...).

6. Method according to one of the claims 1-5 with the biometric input device (31) being integrated in the token (10) comprising the steps of pressing a finger onto the token (10) while biometric data (58) is read.

7. Method according to one of the claims 1-6 comprising the steps of storing the biometric data (58) or a hash of the biometric data (58) in the memory device (5) and/or storing a password in the memory device (5).

8. Method according to one of the claims 1 to 7 comprising the steps of comparing a password entered with the password stored in the token (10) and/or reading biometric data from the user and comparing biometric data read with biometric data (58) stored in the token (10) or in the database (104) of the authority (100) and providing access to the system in case that the compared data match and/or storing mismatched data as proof for legal prosecution of a non-authorised user of the token 10.

9. Method according to one of the claims 1 to 8 comprising the steps of generating the key pair for the user, the private-key (51) and the public-key (52) within the token (10).

10. Method according to one of the claims 1 to 9 comprising the steps of performing transactions defined by the authority of the public-key infrastructure while using the registered token (10).

11. Method according to one of the claims 1 to 10 comprising the steps of keeping the user's data, particularly the biometric data, private except for cases of fraud.

12. Token (10) designed for registering users at an authority (100) of a public-key infrastructure according to the method of claim 1, comprising a processor (2), a memory device (5), an operating system (4) and an interface device (3) designed for exchanging data with a terminal (20, 30) which is capable to access the network (200) of the public-key infrastructure, said memory device (5) containing a private-key (51) and a public-key (52) for a user of the token (10) **characterised in that**
a) the memory device (5) further contains a key of an asymmetric or symmetric key pair, a private-key (53), or a shared password issued by the authority (100);
b) the token (10) is capable of processing biometric data (58) read and transferred from an internal or external biometric input device (31);
c) the token (10) is capable of signing the read biometric data (58) with the key of the asymmetric or symmetric key pair, the private key (53), or by means of the shared password, that is issued by the authority (100) and stored in the token (10);
d) the token (10) is capable of storing a certificate (520) which has been issued by the authority (100) based upon a certification request originating from the token (10).

13. Token (10) according to claim 12 capable of signing the read biometric data (58) with the key of the asymmetric or symmetric key pair or by means of a shared password and the user's private key (51).

14. Token (10) according to claim 12 or 13, with a serial number of the token being stored in the memory device (5).

15. Token (10) according to claim 12, 13 or 14 for a public-key infrastructure with an authority (100), consisting of a registration authority (101), a certification authority (102) and a key and certificate management unit (103), comprising an individual key of a symmetric or asymmetric key-pair or a shared password for signing the biometric data (58) and a public-key (55) issued by the registration authority (101) or the certification authority (102) for encrypting the certification request sent to the authority (100).

16. Token (10) according to one of the claims 12-15 with the biometric input device (1) being integrated in the token (10).

17. Token (10) according to one of the claims 12-16 designed to store the read biometric data (58) or a hash of the biometric data (58) in the memory device (5) and/or storing a password in the memory device (5).

18. Token (10) according to one of the claims 12-17 capable to compare a password entered with the password stored in the token (10) and/or capable of reading biometric data from the user and comparing biometric data read with biometric data (58) stored in the token (10) providing access to the system in case that the compared data match.

19. Token (10) according to one of the claims 12-18 capable to generating the key pair for the user, the private-key (51) and the public-key (52), within the token (10).

20. Registration system (35) comprising a token (10) according to one of the claims 12-19 with a terminal(30) designed to exchange data with the network (200) of a public-key infrastructure, and at least one biometric input device (31) capable of reading biometric data, preferably as data related to a fingerprint, the retina, the face and/or the voice of a user which biometric data is transferable via the terminal (30) to the token (10) for processing.

## Patentansprüche

1. Verfahren zur Registrierung von Anwendern einer Public-Key-Infrastruktur, basierend auf Legitimationsinformationen eines Anwenders, einschliesslich biometrischer Daten, die einer Institution (100) der Public-Key-Infrastruktur präsentiert werden, wobei
a) ein Datenträger (10); welches einen Prozessor (2), eine Schnittstelleneinheit (3) und eine Speichereinheit (5) aufweist, die einen privaten Schlüssel (51) und einen öffentlichen Schlüssel (52) des Anwenders des Datenträgers (10) enthält; mit einem Endgerät (20, 30) verbunden wird, das geeignet ist für den Zugriff auf das Netzwerk (200) der Public-Key-Infrastruktur;
**dadurch gekennzeichnet, dass**
b1) die biometrischen Daten (58) des Anwenders mittels einer biometrischen Eingabeeinheit (1; 31) gelesen werden;
b2) die biometrischen Daten (58) mit einem Schlüssel eines asymmetrischen oder symmetrischen Schlüsselpaares, eines von der Institution (100) herausgegebenen privaten Schlüssels (53) oder eines Passwortes, signiert und im Datenträger (10) gespeichert werden;
b3) ein Zertifizierungsgesuch, enthaltend den öffentlichen Schlüssel (52), signierte biometrischen Daten (58) und zusätzliche Legitimationsinformationen des Anwenders, an die Institution (100) gesandt wird;
c1) die erhaltenen Daten von der Institution (100) geprüft und registriert werden;
c2) die biometrischen Daten (58) in einer Datenbank gespeichert (104) werden;
c3) ein entsprechendes Zertifikat (520) retourniert (520) wird und
d) das Zertifikat (520) im Datenträger gespeichert wird.

2. Verfahren nach Anspruch 1, enthaltend die Verfahrensschritte, die biometrischen Daten mit dem genannten Schlüssel eines asymmetrischen oder symmetrischen Schlüsselpaares oder mittels des gemeinsamen Passwortes und dem privaten Schlüssel (51) des Anwenders doppelt zu signieren,

3. Verfahren nach Anspruch 1 oder 2, mit einer in der Speichereinheit (5) gespeicherten Serienummer des Datenträgers (10), die, enthalten im Zertifizierungsgesuch, zur Institution (100) gesandt wird, die, basierend auf dieser Serienummer, den symmetrischen oder asymmetrischen Schlüssel oder das Passwort lädt, das zum Schlüssel oder Passwort korrespondiert, mittels dessen die biometrischen Daten (58) signiert wurden, um die signierte Meldung zu entschlüsseln.

4. Verfahren nach Anspruch 1, 2 oder 3 für eine Public-Key-Infrastruktur mit einer Institution (100), die eine Registrierungsstelle (101), eine Zertifizierungsstelle (102) und eine Schlüssel- und Zertifikatsverwaltungsstelle (103) aufweist, enthaltend die Verfahrensschritte, dass für jeden Datenträger (10) ein individuelles symmetrisches oder asymmetrisches Schlüsselpaar ausgegeben wird, mit einem der Signierung der biometrischen Daten (58) dienenden ersten Schlüssel, der im Datenträger (10) gespeichert wird, und einem zweiten Schlüssel (54) der in der Registrierungsstelle (101) gespeichert wird.

5. Verfahren nach Anspruch 1, 2, 3 oder 4, bei dem der öffentliche Schlüssel (54; 55) der Registrierungsstelle (101) und/oder der Zertifizierungsstelle (102) im Datenträger gespeichert ist, enthaltend die Verfahrensschritte, dass zumindest ein Teil des Zertifizierungsgesuchs, das die biometrischen Daten (58) enthält, mit einem der öffentlichen Schlüssel (54; 55) verschlüsselt wird, bevor es versandt wird und dass das empfangene Zertifizierungsgesuch durch die Registrierungsstelle (101) mit dem korrespondierenden privaten Schlüssel (53, ...) entschlüsselt wird.

6. Verfahren nach einem der Ansprüche 1-5, bei dem die biometrische Eingabeeinheit (31) in den Datenträger (10) integriert ist, enthaltend die Verfahrensschritte, dass ein Finger auf den Datenträger (10) gedrückt wird, während biometrischen Daten (58) gelesen werden.

7. Verfahren nach einem der Ansprüche 1-6, enthaltend die Verfahrensschritte, dass die biometrischen Daten (58) oder eine Prüfsumme der biometrischen Daten (58) und/oder ein Passwort in der Speichereinheit (5) gespeichert wird.

8. Verfahren nach einem der Ansprüche 1-7 , enthaltend die Verfahrensschritte, dass das eingegebene Passwort mit dem im Datenträger (10) gespeicherten Passwort verglichen wird und/oder dass biometrische Daten des Anwenders gelesen und mit biometrischen Daten (58) verglichen werden, die im Datenträger (10) oder in der Datenbank (104) der Institution (100) gespeichert sind, und dass der Zugang zum System gewährt wird, falls die verglichenen Daten übereinstimmen und/oder dass nicht übereinstimmende Daten als Beweismittel zur Verfolgung eines nicht autorisierten Anwenders des Datenträgers (10) gespeichert werden.

9. Verfahren nach einem der Ansprüche 1-8, enthaltend die Verfahrensschritte, dass das Schlüsselpaar für den Anwender, der private Schlüssel (51) und der öffentliche Schlüssel (52), innerhalb des Datenträgers (10) generiert wird.

10. Verfahren nach einem der Ansprüche 1-9 , enthaltend die Verfahrensschritte, dass durch die Institution der Public-Key-Infrastruktur definierte Transaktionen durchgeführt werden während der registrierte Datenträger (10) verwendet wird.

11. Verfahren nach einem der Ansprüche 1-10, enthaltend die Verfahrensschritte, dass Anwenderdaten, insbesondere biometrischen Daten privat gehalten werden, sofern kein Betrugsfall vorliegt.

12. Datenträger (10) geeignet zur Registrierung von Anwendern bei einer Institution (100) einer Public-Key-Infrastruktur gemäss Anspruch 1, mit einem Prozessor (2), einer Speichereinheit (5), einem Betriebssystem (4) und einer Schnittstelleneinheit (3), die für den Datenaustausch mit einem Endgerät (20, 30) vorgesehen ist, das für den Zugriff auf das Netzwerk (200) der Public-Key-Infrastruktur geeignet ist, wobei die genannte Speichereinheit (5) einen privaten Schlüssel (51) und einen öffentlichen Schlüssel (52) für einen Anwenders des Datenträgers (10) enthält, **dadurch gekennzeichnet, dass**
a) die Speichereinheit (5) ferner einen Schlüssel eines asymmetrischen oder symmetrischen Schlüsselpaares enthält, ein von der Institution (100) herausgegebener privater Schlüssel (53) oder ein Passwort;
b) der Datenträger (10) geeignet ist, biometrische Daten (58) zu verarbeiten, die von einer internen oder externen biometrischen Eingabeeinheit (31) gelesen und transferiert wurden;
c) der Datenträger (10) geeignet ist, gelesene biometrische Daten (58) mit dem Schlüssel des asymmetrischen oder symmetrischen Schlüsselpaares, dem von der Institution (100) herausgegebenen und im Datenträger (10) gespeicherten privaten Schlüssel (53) oder dem Passwort, zu signieren;
d) der Datenträger (10) geeignet ist, ein Zertifikat (520) zu speichern, das von der Institution (100) basierend auf einem vom Datenträger (10) stammenden Zertifizierungsgesuch herausgegeben wurde.

13. Datenträger (10) nach Anspruch 12, geeignet zur Signierung gelesener biometrischer Daten (58) mittels des Schlüssels des asymmetrischen oder symmetrischen Schlüsselpaares oder mittels des gemeinsamen Passworts und dem privaten Schlüssel (51) des Anwenders.

14. Datenträger (10) nach Anspruch 12 oder 13, mit einer in der Speichereinheit (5) gespeicherten Serienummer des Datenträgers (10).

15. Datenträger (10) nach Anspruch 12, 13 oder 14 für eine Public-Key-Infrastruktur mit einer Institution (100), die eine Registrierungsstelle (101), eine Zertifizierungsstelle (102) und eine Schlüssel- und Zertifikatsverwaltungsstelle (103) aufweist, mit einem Schlüssel eines symmetrischen oder asymmetrisches Schlüsselpaars oder einem gemeinsamen Passwort zur Signierung biometrischer Daten (58) und einem von der Registrierungsstelle (101) oder der Zertifizierungsstelle (102) herausgegebenen öffentlichen Schlüssel (55), der der Verschlüsselung des Zertifizierungsgesuchs dient, das zur Institution (100) gesandt wird.

16. Datenträger (10) nach einem der Ansprüche 12-15 mit einer biometrischen Eingabeeinheit (1), die in den Datenträger (10) integriert ist.

17. Datenträger (10) nach einem der Ansprüche 12-16 geeignet zum Speichern der gelesenen biometrischen Daten (58) oder einer Prüfsumme der biometrischen Daten (58) und/oder eines Passworts in der Speichereinheit (5).

18. Datenträger (10) nach einem der Ansprüche 12-17, geeignet, ein eingegebenes Passwort mit einem im Datenträger (10) gespeicherten Passwort zu vergleichen und/oder geeignet, biometrische Daten (58) des Anwenders zu lesen und gelesene biometrischen Daten (58) mit im Datenträger (10) gespeicherten biometrischen Daten (58) zu vergleichen, und Zugang zum System zu gewähren, sofern die verglichenen Daten übereinstimmen.

19. Datenträger (10) nach einem der Ansprüche 12-18, geeignet, innerhalb des Datenträgers (10) ein Schlüsselpaar, den privaten Schlüssel (51) und den öffentlichen Schlüssel (52), für den Anwender zu generieren.

20. Registrierungssystem (35) mit einem Datenträger (10) nach einem der Ansprüche 12-19, einem Endgerät (30), das für den Datenaustausch mit dem Netzwerk (200) der Public-Key-Infrastruktur geeignet ist, und wenigstens einer biometrischen Eingabeeinheit (31), die geeignet ist, biometrische Daten zu lesen, vorzugsweise Daten, die einen Fingerabdruck, die Retina, das Gesicht und/oder die Stimme des Anwenders betreffen, welche biometrischen Daten über das Endgerät (30) zum Datenträger (10) für die Verarbeitung transferierbar sind.

## Revendications

1. Procédé pour l'enregistrement d'utilisateurs d'une infrastructure de clé publique basée sur des informations de légitimation d'un utilisateur, comprenant des données biométriques présentées à une autorité (100) de l'infrastructure de clé publique, dans lequel
a) un jeton (10), qui comprend un processeur (2), un dispositif d'interface (3) et un dispositif de mémoire (5) contenant une clé privé (51) et une clé publique (52) pour l'utilisateur du jeton (10), est connecté à un terminal (20, 30) capable d'accéder au réseau (200) de l'infrastructure de clé publique;
**caractérisé par** les étapes de
b1) lecture des données biométriques (58) de l'utilisateur au moyen d'un dispositif d'entrée biométrique (1; 31);
b2) signature des données biométriques (58) avec une clé d'une paire de clé asymétrique ou symétrique, une clé privée (53) ou au moyen d'un mot de passé partagé, qui a été émis par l'autorité (100) et mémorisé dans le jeton (10);
b3) l'envoi d'une requête de certification, contenant la clé publique (52), la donnée biométrique signée (58) et des informations de légitimation supplémentaires de l'utilisateur, à l'autorité (100);
c1) vérification et enregistrement des données reçues par l'autorité (100);
c2) stockage des données biométriques (58) dans une base de données (104);
c3) renvoi d'un certificat correspondant (520) et
d) stockage du certificat (520) dans le jeton.

2. Procédé selon la revendication 1, comprenant les étapes de double signature des données biométriques avec ladite clé d'une paire de clés asymétriques ou symétriques ou au moyen d'un mot de passé partagé et d'une clé utilisateur priéve (51).

3. Procédé selon la revendication 1 ou 2, avec un numéro de série du jeton stocké dans le dispositif à mémoire (5), lequel, inclus dans la requête de certification, est envoyé à l'autorité (100) laquelle, basée sur ledit numéro de série, récupère la clé symétrique ou asymétrique ou le mot de passe correspondant à la clé ou au mot de passe utilisé pour la signature des données biométriques (58) afin de décrire le message signé.

4. Procédé selon la revendication 1, 2 ou 3 pour une infrastructure de clé publique avec une autorité (100), constitué d'une autorité d'enregistrement (101), une autorité de certification (102) et une clé et une unité de gestion de certificats (103), comprenant les étapes d'édition pour chaque jeton (10) d'une paire de clés individuelles symétriques ou asymétriques, une première clé stockée dans le jeton (10) pour la signature des données biométriques (58) et une seconde clé (54) stockée dans l'autorité d'enregistrement (101).

5. Procédé selon la revendication 1, 2, 3 ou 4, la clé publique (54; 55) de l'autorité d'enregistrement (101) et de l'autorité de certification (102) étant stockée dans le jeton (10), comprenant les étapes d'encryptage d'au moins une partie de la requête de certification contenant les données biométriques avec l'une desdits clés publiques (54; 55) avant son envoi et décryptage de la requête de certification reçue par l'autorité d'enregistrement (101) avec la clé privée correspondante (53, ...).

6. Procédé selon l'une des revendications 1 à 5 avec le dispositif d'entrée biométrique (31) intégré dans le jeton (10) comprenant les étapes de pressage d'un doigt sur le jeton (10) pendant la lecture des données biométriques (58).

7. Procédé selon l'une des revendications 1 à 6 comprenant les étapes de stockage des données biométriques (58) ou un hachage des données biométriques (58) dans le dispositif de mémoire (5) et/ou de stockage d'un mot de passe dans le dispositif de mémoire (5).

8. Procédé selon l'une des revendications 1 à 7 comprenant les étapes de comparaison d'un mot de passé entré avec le mot de passé stocké dans le jeton (10) et/ou la lecture de données biométriques depuis un utilisateur et comparaison de données biométriques avec des données biométriques (58) stockées dans le jeton (10) ou dans la base de données (104) de l'autorité (100) et fourniture d'accès au système dans le cas où la donnée comparée correspond et/ou la donnée stockée non correspondante en tant que preuve en cas de poursuite légale à l'encontre d'un utilisateur non autorisé du jeton (10).

9. Procédé selon l'une des revendications 1 à 8 comprenant les étapes de génération de la paire de clés pour l'utilisateur, la clé privée (51) et la clé publique (52) à l'intérieur du jeton (10).

10. Procédé selon l'une des revendications 1 à 9 comprenant les étapes d'exécution des transactions définies par l'autorité de l'infrastructure de la clé publique tout en utilisant le jeton enregistré (10).

11. Procédé selon l'une des revendications 1 à 10 comprenant les étapes de préservation de la confidentialité des données utilisateurs privées, en particulier les données biométriques, à l'exception de cas de fraude.

12. Jeton (10) désigné pour l'enregistrement des utilisateurs à une autorité (100) d'une infrastructure de clé publique selon le procédé de la revendication 1, comprenant un processeur (2), un dispositif de mémoire (5), un système d'opération (4) et un dispositif d'interface (3) destiné à l'échange de données avec un terminal (20, 30) qui est capable d'accéder au réseau (200) de l'infrastructure de la clé publique, ledit dispositif de mémoire (5) contenant une clé privée (51) et une clé publique (52) pour un utilisateur du jeton (10) **caractérisé en ce que**
a) le dispositif de mémoire (5) comprend en outré une clé d'une paire de clé asymétrique ou symétrique, une clé privée (53), ou un mot de passe partagé édité par l'autorité (100);
b) le jeton (10) est capable de traiter des données biométriques (58) lues et transférées depuis un dispositif interne ou externe d'entrée biométrique (31) ;
c) le jeton (10) est capable de signer les données biométriques lues (58) avec la clé de la paire de clés asymétriques ou symétriques, la clé privée (53), ou au moyen du mot de passe partagé qui est édité par l'autorité (100) et stocké dans le jeton (10);
d) le jeton (10) est capable de stocker un certificat (520) qui a été édité par l'autorité (100) en se basant sur une requête de certification provenant du jeton (10).

13. Jeton (10) selon la revendication 12 capable de signer les données biométriques lues (58) avec la clé de la paire de clés asymétriques ou symétriques, ou au moyen d'un mot de passe partagé et de la clé utilisateur privée (51).

14. Jeton (10) selon la revendication 12 ou 13, avec un numéro de série du jeton stocké dans le dispositif de mémoire (5).

15. Jeton (10) selon la revendication 12, 13 ou 14 pour une infrastructure avec une autorité (100), constituée d'une autorité d'enregistrement(101), d'une autorité de certification (102) et d'une unité de gestion de clé et de certificat (103), comprenant une clé individuelle d'une paire de clé asymétriques ou symétriques ou d'un mot de passe partagé pour la signature des données biométriques (58) et d'une clé publique (55) éditée par l'autorité d'enregistrement (101) ou l'autorité de certification (102) pour le cryptage de la requête de certification envoyée à l'autorité (100).

16. Jeton (10) selon l'une des revendications 12 à 15 avec le dispositif d'entrée biométrique (1) étant intégré dans le jeton (10).

17. Jeton 10) selon l'une des revendications 12 à 16 désigné pour stocker les données biométriques lues (58) et un hachage des données biométriques (58) dans le dispositif de mémoire (5) et/ou stockage d'un mot de passe dans le dispositif de mémoire (5).

18. Jeton (10) selon l'une des revendications 12 à 17 capable de comparer un mot de passe entrée avec le mot de passé stocké dans le jeton (10) et/ou capable de lire les données biométriques depuis l'utilisateur et comparant les données biométriques lues avec la données biométrique (58) stockée dans le jeton (10) fournissant l'accès au système dans le cas où les données comparées concordent.

19. Jeton (10) selon l'une des revendications 12 à 18 capable de générer la paire de clés pour l'utilisateur, la clé privée(51) et la clé publique (52) avec le jeton (10).

20. Système d'enregistrement (35) comprenant un jeton (10) selon l'une des revendications 12-19, un terminal (30) conçu pour échanger les données avec le réseau (200) d'une infrastructure de clé publique et au moins un dispositif d'entrée biométrique (31) capable de lire les données biométriques, de préférence des données relatives à une empreinte digitale, la rétine, le visage et/ou la voix d'un utilisateur dont les données biométriques sont transférables par le terminal (30) au jeton (10) pour le traitement.
